(19) Europäisches Patentamt
European Patent Office
Office européen des brevets

(11) **EP 4 579 811 A1**

(12) **EUROPEAN PATENT APPLICATION**
published in accordance with Art. 153(4) EPC

(43) Date of publication:
**02.07.2025 Bulletin 2025/27**

(51) International Patent Classification (IPC):
$H01M\ 4/525^{(2010.01)}$     $H01M\ 4/505^{(2010.01)}$
$H01M\ 10/0525^{(2010.01)}$

(21) Application number: 23923255.6

(22) Date of filing: **20.02.2023**

(52) Cooperative Patent Classification (CPC):
**H01M 4/505; H01M 4/525; H01M 10/0525;**
Y02E 60/10

(86) International application number:
**PCT/CN2023/077229**

(87) International publication number:
**WO 2024/174069 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Central (HK)**

(72) Inventors:
• WANG, Bangrun
  Ningde, Fujian 352100 (CN)
• ZHANG, Xingwen
  Ningde, Fujian 352100 (CN)
• LIU, Na
  Ningde, Fujian 352100 (CN)

(74) Representative: **Gong, Jinping
CocreateIP
Neumarkter Straße 21
81673 München (DE)**

(54) **LITHIUM-RICH METAL OXIDE AND PREPARATION METHOD THEREFOR, POSITIVE ELECTRODE SHEET, BATTERY CELL, AND BATTERY**

(57)     This application provides a lithium-rich metal oxide and a preparation method thereof, a positive electrode plate, a battery cell, and a battery, and relates to the field of battery technology. The lithium-rich metal oxide includes a lithium-rich metal oxide core and residual lithium on a surface of the lithium-rich metal oxide core. Based on 100 wt% as a total mass of the lithium-rich metal oxide, a mass percent k of the residual lithium satisfies: $k \leq 0.5$ wt%, and a lithium-ion diffusion coefficient D of the lithium-rich metal oxide satisfies: $D \geq 1.0 \times 10^{-15}$ cm$^2$/s. When applied to a battery cell, the lithium-rich metal oxide of this application improves performance of the battery cell.

200 nm

Residual lithium          Compound LiF

FIG. 1

**Description**

**TECHNICAL FIELD**

This application relates to the field of battery technology, and in particular, to a lithium-rich metal oxide and a preparation method thereof, a positive electrode plate, a battery cell, and a battery.

**BACKGROUND**

With the aggravation of environmental pollution, the new energy industry is attracting more and more attention. Battery technology is crucial to the development of the new energy industry.

As a material for preparing a positive electrode plate of a battery cell, lithium-rich metal oxide is crucial to the performance of the battery cell. Therefore, how to provide a lithium-rich metal oxide to improve the performance of the battery cell is a pressing technical challenge.

**SUMMARY**

This application addresses the above challenge. An objective of this application is to provide a lithium-rich metal oxide to improve performance of battery cells.

To achieve the above objective, this application provides a lithium-rich metal oxide and a preparation method thereof, a positive electrode plate, a battery cell, and a battery.

According to a first aspect, this application provides a lithium-rich metal oxide. The lithium-rich metal oxide includes: a lithium-rich metal oxide core; and residual lithium on a surface of the lithium-rich metal oxide core. Based on 100 wt% as a total mass of the lithium-rich metal oxide, a mass percent k of the residual lithium satisfies: $k \leq 0.5$ wt%, and a lithium-ion diffusion coefficient D of the lithium-rich metal oxide satisfies: $D \geq 1.0 \times 10^{-15}$ cm$^2$/s.

An embodiment of this application provides a lithium-rich metal oxide that includes a lithium-rich metal oxide core and residual lithium on a surface of the metal oxide core. The content of lithium ions in the lithium-rich metal oxide core is relatively high. The lithium-rich metal oxide core selected for preparing a positive electrode material improves the charge capacity of a battery cell. Based on 100 wt% as a total mass of the lithium-rich metal oxide, the mass percent k of the residual lithium on the surface of the lithium-rich metal oxide core is less than or equal to 0.5 wt%, thereby reducing the impact of the residual lithium on the processing of the positive electrode plate, reducing the impact of the residual lithium on the deintercalation of lithium ions from the lithium-rich metal oxide core, and in turn, reducing the impact on the charge capacity of the battery cell. The lithium-ion diffusion coefficient D of the lithium-rich metal oxide satisfies: $D \geq 1.0 \times 10^{-15}$ cm$^2$/s, thereby making it convenient to deintercalate the lithium ions from the lithium-rich metal oxide, and improving the charge capacity of the battery cell. Therefore, when applied to a battery cell, the lithium-rich metal oxide according to this embodiment of this application improves the performance of the battery cell.

In a possible implementation, $k \leq 0.1$ wt%. In this way, the content of residual lithium on the surface of the lithium-rich metal oxide core is further reduced, thereby further reducing the impact of the residual lithium on the processing of the positive electrode plate and the impact on the deintercalation of the lithium ions from the lithium-rich metal oxide, facilitating the preparation of the positive electrode plate, and further improving the charge capacity of the battery cell.

In a possible implementation, $D \geq 1.0 \times 10^{-12}$ cm$^2$/s. In this way, the diffusion coefficient of lithium ions in the lithium-rich metal oxide is further increased, thereby making it convenient to deintercalate the lithium ions from the lithium-rich metal oxide, and further improving the charge capacity of the battery cell.

In a possible implementation, a resistivity $\rho$ of the lithium-rich metal oxide satisfies: $\rho \leq 1\,\Omega \cdot$cm, and optionally, $\rho \leq 0.5\,\Omega \cdot$cm. In this way, the resistivity of the lithium-rich metal oxide is relatively low, thereby improving the conductivity of the lithium-rich metal oxide, making it convenient to deintercalate the lithium ions from the lithium-rich metal oxide, and improving the charge capacity of the battery cell.

In a possible implementation, the lithium-rich metal oxide further includes: a compound Li$_z$X on the surface of the lithium-rich metal oxide core, where X includes at least one of F$^-$, Cl$^-$, NO$_3^-$, or HSO$_4^{-1}$, and z = 1; or, X includes SO$_4^{2-}$, and z = 2.

In the above technical solution, the lithium-rich metal oxide includes the compound Li$_z$X on the surface of the lithium-rich metal oxide core. On the one hand, the compound Li$_z$X exerts little impact on the processing of the positive electrode plate. For example, the compound Li$_z$X is less likely to cause denaturation of the binder polyvinylidene difluoride and consequent gelation of a positive electrode slurry. On the other hand, the compound Li$_z$X exerts little impact on the deintercalation of lithium ions from the lithium-rich metal oxide core, thereby improving the charge capacity of the battery cell. Therefore, this technical solution improves the performance of the battery cell.

In a possible implementation, the lithium-rich metal oxide includes: the lithium-rich metal oxide core; and a coating layer. The coating layer coats the lithium-rich metal oxide core, and the coating layer includes the compound Li$_z$X.

In the above scheme, the coating layer coats the lithium-rich metal oxide core, thereby reducing the risk that the lithium-rich metal oxide core reacts with water and carbon dioxide in the air, thereby improving the stability of the lithium-rich metal oxide. The coating layer includes the compound $Li_zX$, thereby improving the diffusion coefficient of lithium ions in the coating layer and the conductivity of the coating layer, and in turn, improving the charge capacity of the battery cell.

In a possible implementation, a molar ratio of the compound $Li_zX$ to the lithium-rich metal oxide core is 0.01: 1 to 0.1: 1, and optionally, the molar ratio of the compound $Li_zX$ to the lithium-rich metal oxide core is 0.02: 1 to 0.05: 1. This arrangement achieves a good trade-off between the charge capacity of the battery cell and the cost of production and processing of the battery cell.

In a possible implementation, the compound $Li_zX$ is LiF. This arrangement further improves the performance of the lithium-rich metal oxide, thereby further improving the charge capacity of the battery cell.

In a possible implementation, a volume median diameter $D_{v50}$ of the lithium-rich metal oxide is 2 $\mu$m to 10 $\mu$m, and optionally 4 $\mu$m to 8 $\mu$m. When the volume median diameter of the lithium-rich metal oxide falls within the above range, the path for deintercalation of lithium ions from the lithium-rich metal oxide core is moderate in length, thereby facilitating deintercalation of lithium ions, and improving the charge capacity of the battery cell prepared from the lithium-rich metal oxide. When the volume median diameter of the lithium-rich metal oxide falls within the above range, the surface activity of the lithium-rich metal oxide can be controlled, and the agglomeration between lithium-rich metal oxide particles or lithium-rich metal oxide core particles can be suppressed, and the particles are of high dispersivity, thereby making it convenient to distribute the compound $Li_zX$ uniformly on the surface of the lithium-rich metal oxide core. The appropriate value of the volume median diameter of the lithium-rich metal oxide contributes to a good trade-off between the uniformity of distribution of the compound $Li_zX$ of the lithium-rich metal oxide and the charge capacity of the battery cell.

In a possible implementation, a specific surface area of the lithium-rich metal oxide is 0.2 m$^2$/g to 5 m$^2$/g, and optionally 0.5 m$^2$/g to 2 m$^2$/g. This arrangement further improves the capacity of the battery cell.

In a possible implementation, a material of the lithium-rich metal oxide core includes $Li_aM^nO_y$, where $2 \le a \le 8$. The $Li_aM^nO_y$ includes one or more of $Li_2M^1O_2$, $Li_2M^2O_3$, $Li_3M^3O_4$, $Li_5M^4O_4$, $Li_6M^5O_4$, or $Li_8M^6O_6$. $M^1$ includes one or more of Ni, Co, Fe, Mn, Zn, Mg, Ca, Cu, or Mo; $M^2$ includes one or more of Mn, Sn, Mo, Ru, or Ir; $M^3$ includes one or more of V, Nb, Cr, or Mo; $M^4$ includes one or more of Fe, Cr, V, or Mo; $M^5$ includes one or more of Co, V, Cr, or Mo; $M^6$ includes Sn. Optionally, the $Li_aM^nO_y$ includes one or more of $Li_2NiO_2$, $Li_2CuO_2$, $Li_2MnO_3$, $Li_3VO_4$, $Li_3NbO_4$, $Li_5FeO_4$, $Li_6CoO_4$, or $Li_8SnO_6$. In this way, it is convenient to flexibly select an appropriate lithium-rich metal oxide core according to actual needs.

According to a second aspect, this application provides a method for preparing a lithium-rich metal oxide. The method includes: providing an ammonium salt and a lithium-rich metal oxide core; and mixing the ammonium salt and the lithium-rich metal oxide core, and treating the mixture to obtain the lithium-rich metal oxide. The lithium-rich metal oxide prepared by this method is of high conductivity and stability. When applied to a battery cell, the lithium-rich metal oxide of this application improves the performance of the battery cell.

In a possible embodiment, the treatment includes: sintering in an inert atmosphere for 2 to 10 hours, and optionally 4 to 8 hours; and/or the treatment is performed at a temperature of 100 °C to 600 °C, and optionally 200 °C to 500 °C. In this way, the reasonable setting of the sintering time and treatment temperature facilitates the reaction between the ammonium salt and the residual lithium on the surface of the lithium-rich metal oxide core, so as to obtain the compound $Li_zX$ on the surface of the lithium-rich metal oxide core after completion of the reaction. The reasonable setting is also conducive to saving cost and reducing the consumption of active lithium in the lithium-rich metal oxide core.

Optionally, the ammonium salt includes at least one of ammonium fluoride, ammonium chloride, ammonium nitrate, ammonium sulfate, or ammonium bisulfate; and optionally, the ammonium salt includes ammonium fluoride. In this way, it is convenient to select the type of ammonium salt flexibly according to actual conditions.

In a possible implementation, a molar ratio of the ammonium salt to the lithium-rich metal oxide core is (0.021 to 0.15): 1, and optionally 0.03: 1 to 0.08: 1. In this way, the ratio of the ammonium salt to the lithium-rich metal oxide core is set reasonably to generate the desired compound $Li_zX$ without incurring adverse effects such as waste caused by excessive ammonium salt content.

In a possible implementation, the method further includes: performing airflow pulverization and sieving on a product of the treatment to obtain the lithium-rich metal oxide. In this way, the lithium-rich metal oxide of an appropriate particle size is obtained conveniently.

In a possible implementation, a material of the lithium-rich metal oxide core includes $Li_aM^nO_y$, where $2 \le a \le 8$. The $Li_aM^nO_y$ includes one or more of $Li_2M^1O_2$, $Li_2M^2O_3$, $Li_3M^3O_4$, $Li_5M^4O_4$, $Li_6M^5O_4$, or $Li_8M^6O_6$. $M^1$ includes one or more of Ni, Co, Fe, Mn, Zn, Mg, Ca, Cu, or Mo; $M^2$ includes one or more of Mn, Sn, Mo, Ru, or Ir; $M^3$ includes one or more of V, Nb, Cr, or Mo; $M^4$ includes one or more of Fe, Cr, V, or Mo; $M^5$ includes one or more of Co, V, Cr, or Mo; $M^6$ includes Sn. Optionally, the $Li_aM^nO_y$ includes one or more of $Li_2NiO_2$, $Li_2CuO_2$, $Li_2MnO_3$, $Li_3VO_4$, $Li_3NbO_4$, $Li_5FeO_4$, $Li_6CoO_4$, or $Li_8SnO_6$. In this way, it is convenient to flexibly select an appropriate lithium-rich metal oxide core according to actual needs.

According to a third aspect, this application provides a positive electrode plate. The positive electrode plate includes the lithium-rich metal oxide disclosed in the first aspect or any one possible implementation of the first aspect.

According to a fourth aspect, this application provides a battery cell. The battery cell includes the positive electrode plate disclosed in the third aspect.

According to a fifth aspect, this application provides a battery. The battery includes the battery cell disclosed in the fourth aspect.

According to a sixth aspect, this application provides an electrical device. The electrical device includes the battery disclosed in the fifth aspect.

An embodiment of this application provides a lithium-rich metal oxide that includes a lithium-rich metal oxide core and residual lithium on a surface of the metal oxide core. The content of lithium ions in the lithium-rich metal oxide core is relatively high. The lithium-rich metal oxide core selected for preparing a positive electrode material improves the charge capacity of a battery cell. Based on 100 wt% as a total mass of the lithium-rich metal oxide, the mass percent k of the residual lithium on the surface of the lithium-rich metal oxide core is less than or equal to 0.5 wt%, thereby reducing the impact of the residual lithium on the processing of the positive electrode plate, reducing the impact of the residual lithium on the deintercalation of lithium ions from the lithium-rich metal oxide core, and in turn, reducing the impact on the charge capacity of the battery cell. The lithium-ion diffusion coefficient D of the lithium-rich metal oxide satisfies: $D \geq 1.0 \times 10^{-15}$ cm$^2$/s, thereby making it convenient to deintercalate the lithium ions from the lithium-rich metal oxide, and improving the charge capacity of the battery cell. Therefore, when applied to a battery cell, the lithium-rich metal oxide according to this embodiment of this application improves the performance of the battery cell.

## BRIEF DESCRIPTION OF DRAWINGS

FIG. 1 is a scanning electron microscope image of a lithium-rich metal oxide according to an embodiment of this application;

FIG. 2 is an SEM image of a lithium-rich metal oxide core before reaction;

FIG. 3 is a schematic diagram of a method for preparing a lithium-rich metal oxide according to an embodiment of this application;

FIG. 4 is a schematic diagram of a battery cell according to an embodiment of this application;

FIG. 5 is a schematic diagram of a battery module according to an embodiment of this application;

FIG. 6 is a schematic diagram of a battery according to an embodiment of this application; and

FIG. 7 is a schematic diagram of an electrical device according to an embodiment of this application.

## DETAILED DESCRIPTION

The following discloses and describes in detail some embodiments of a lithium-rich metal oxide and a preparation method thereof, a battery cell, a battery, and an electrical device of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments of this application may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean openended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

By virtue of characteristics such as a high energy density, high voltage, and a long life, lithium-ion batteries are widely used in the fields such as mobile phones, electric vehicles, and power storage stations. Lithium-rich metal oxides in a lithium-ion battery are crucial to the performance such as charge capacity of the lithium-ion battery.

With a relatively high content of lithium ions, the lithium-rich metal oxide is widely used in the preparation of lithium-ion batteries. The lithium-rich metal oxide is of relatively low stability, and is prone to react with carbon dioxide and water in the air to generate residual lithium such as a lithium oxide, a hydroxide, and a carbonate salt on the surface of the lithium-rich metal oxide. The presence of the residual lithium affects the performance of the lithium-rich metal oxide. In addition, when the lithium-rich metal oxide is used for preparing a battery cell, the presence of the residual lithium is detrimental to the preparation of the battery cell and the improvement of the charge capacity of the battery cell, thereby impairing the performance of the battery cell.

In some treatment methods, in order to improve the performance of the lithium-rich metal oxide, a corresponding acid is added into a slurry to perform an acid-base neutralization reaction to reduce the content of residual lithium on the surface of the lithium-rich metal oxide. However, the effect of this treatment method is not satisfactory. On the one hand, the content of the residual lithium in the lithium-rich metal oxide obtained after the treatment is relatively high, and the lithium-ion diffusion coefficient of the lithium-rich metal oxide is relatively low. On the other hand, the uneven distribution of the acid in the slurry is prone to cause excessive reaction of some lithium-rich metal oxides, thereby resulting in a decrease in the active lithium inside the lithium-rich metal oxide, and producing an adverse effect on the performance of the battery cell. The lithium-rich metal oxide obtained by the above treatment method is detrimental to improving the performance of the battery cell.

In view of the above situation, this application provides a lithium-rich metal oxide. The content of residual lithium in the lithium-rich metal oxide is relatively low, and the lithium-ion diffusion coefficient of the lithium-rich metal oxide is relatively high. The lithium-rich metal oxide of this application improves the performance of the battery cell.

**[Lithium-rich metal oxide]**

An embodiment of this application provides a lithium-rich metal oxide that includes a lithium-rich metal oxide core and residual lithium on a surface of the lithium-rich metal oxide core.

The content of lithium ions in the lithium-rich metal oxide core is relatively high. The lithium-rich metal oxide core selected for preparing a battery cell improves the charge capacity of a battery cell.

The material of the lithium-rich metal oxide core is a lithium-rich metal oxide such as lithium iron oxide.

Optionally, the shape of the lithium-rich metal oxide core may be spherical or quasi-spherical. The shape of the lithium-rich metal oxide core is not particularly limited herein, as long as the material is lithium-rich metal oxide.

The lithium-rich metal oxide includes active lithium contained in the lithium-rich metal oxide core and residual lithium on the surface of the lithium-rich metal oxide core. The active lithium in the lithium-rich metal oxide can be deintercalated from or intercalated into the lithium-rich metal oxide to participate in the charge-discharge process of the battery cell. The residual lithium on the surface of the lithium-rich metal oxide core does not participate in the charge-discharge process of the battery cell.

The residual lithium refers to the residual lithium on the surface of the lithium-rich metal oxide, and is also referred to as free lithium. The surface of the lithium-rich metal oxide core may be a surface, close to the external environment, of the lithium-rich metal oxide core.

The residual lithium is lithium oxide, lithium hydroxide, lithium carbonate, and other products that are generated by the reaction between the lithium-rich metal oxide core and substituents in the air, where the substituents include water, carbon dioxide, and the like. For example, the residual lithium is $Li_2CO_3$, $LiOH$, $Li_2O$, or the like.

The residual lithium is located on the surface of the lithium-rich metal oxide core, and affects the deintercalation of lithium ions in the lithium-rich metal oxide core, and results in a decline in the performance of the lithium-rich metal oxide and a decrease in the charge capacity of the battery cell. In addition, the residual lithium is relatively alkaline. When the lithium-rich metal oxide core is mixed with a binder to form a slurry to prepare a positive electrode plate, the residual lithium affects the performance of the binder, causes denaturation of the binder such as polyvinylidene fluoride (PVDF), and affects the performance of the slurry and the application of the slurry, thereby affecting the processing of the positive electrode plate. In an embodiment of this application, based on 100 wt% as a total mass of the lithium-rich metal oxide, the mass percent k of the residual lithium satisfies: $k \leq 0.5$ wt%, thereby reducing the impact of the residual lithium on the processing of the positive electrode plate, reducing the impact of the residual lithium on the deintercalation of lithium ions from the lithium-rich metal oxide core, and in turn, reducing the impact on the charge capacity of the battery cell, and improving the charge capacity of the battery cell.

The lithium-ion diffusion coefficient may refer to an average number of lithium ions passing through a medium per unit area per unit time, and can reflect the penetration rate of lithium ions in the medium. The lithium-ion diffusion coefficient of the lithium-rich metal oxide may refer to the diffusion coefficient of lithium ions in the lithium-rich metal oxide.

The lithium-ion diffusion coefficient D of the lithium-rich metal oxide satisfies: $D \geq 1.0 \times 10^{-15}$ cm$^2$/s, thereby making it convenient to deintercalate the lithium ions from the lithium-rich metal oxide, and improving the charge capacity of the battery cell.

Optionally, the charge capacity of the battery cell may include a first-cycle charge capacity of the battery cell. During charge of the battery cell, lithium ions are deintercalated from the lithium-rich metal oxide. For example, the charge capacity of the battery cell may be a ratio of the capacity of a fully charged battery cell to a mass of active materials in the battery cell.

Optionally, the lithium-rich metal oxide in an embodiment of this application may be used as a lithium supplement additive. For example, the lithium-rich metal oxide is mixed with another positive electrode material to supplement active lithium.

Optionally, the lithium-rich metal oxide in an embodiment of this application may also be used as an active agent. For example, the lithium-rich metal oxide is mixed with a binder and a conductive agent to form a slurry, and the slurry is applied onto a positive current collector to make a positive electrode plate.

An embodiment of this application provides a lithium-rich metal oxide that includes a lithium-rich metal oxide core and residual lithium on a surface of the metal oxide core. The content of lithium ions in the lithium-rich metal oxide core is relatively high. The lithium-rich metal oxide core selected for preparing a positive electrode material improves the charge capacity of a battery cell. Based on 100 wt% as a total mass of the lithium-rich metal oxide, the mass percent k of the residual lithium on the surface of the lithium-rich metal oxide core is less than or equal to 0.5 wt%, thereby reducing the impact of the residual lithium on the processing of the positive electrode plate, reducing the impact of the residual lithium on the deintercalation of lithium ions from the lithium-rich metal oxide core, and in turn, reducing the impact on the charge capacity of the battery cell. The lithium-ion diffusion coefficient D of the lithium-rich metal oxide satisfies: $D \geq 1.0 \times 10^{-15}$ cm$^2$/s, thereby making it convenient to deintercalate the lithium ions from the lithium-rich metal oxide, and improving the charge capacity of the battery cell. Therefore, when applied to a battery cell, the lithium-rich metal oxide of this application improves performance of the battery cell.

In some embodiments, $k \leq 0.1$ wt%. In this way, the content of residual lithium on the surface of the lithium-rich metal oxide core is further reduced, thereby further reducing the impact of the residual lithium on the processing of the positive electrode plate and the impact on the deintercalation of the lithium ions from the lithium-rich metal oxide, facilitating the preparation of the positive electrode plate, and further improving the charge capacity of the battery cell.

In some embodiments, $D \geq 1.0 \times 10^{-12}$ cm$^2$/s. In this way, the diffusion coefficient of lithium ions in the lithium-rich metal oxide is further increased, thereby making it convenient to deintercalate the lithium ions from the lithium-rich metal oxide, and further improving the charge capacity of the battery cell.

In some embodiments, a resistivity $\rho$ of the lithium-rich metal oxide satisfies: $\rho \leq 1$ $\Omega \cdot$cm, and optionally, $\rho \leq 0.5$ $\Omega \cdot$cm.

The lower the resistivity of the lithium-rich metal oxide, the higher the conductivity of the lithium-rich metal oxide, and the more smoothly the lithium ions are deintercalated from the lithium-rich metal oxide.

In the above embodiments, the resistivity $\rho$ of the lithium-rich metal oxide is less than or equal to 1 $\Omega \cdot$cm, thereby improving the conductivity of the lithium-rich metal oxide and the charge capacity of the battery cell.

The resistivity $\rho$ of the lithium-rich metal oxide being less than or equal to 0.5 $\Omega \cdot$cm further improves the conductivity of the lithium-rich metal oxide and the charge capacity of the battery cell.

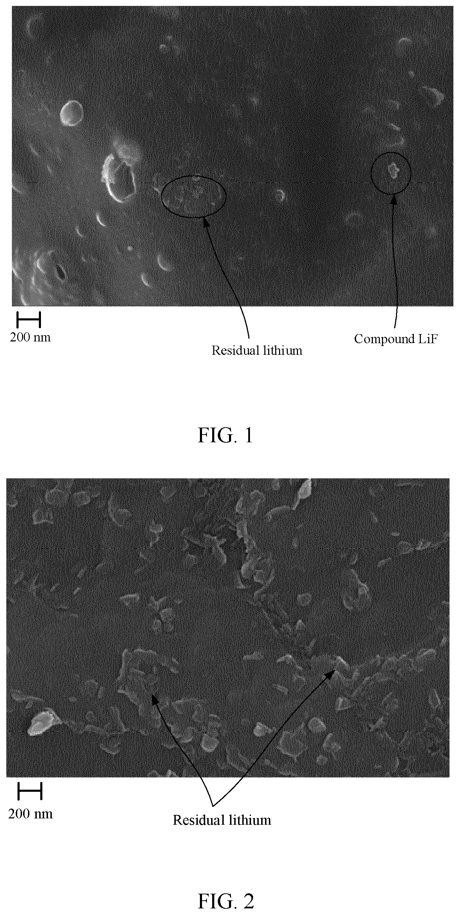

FIG. 1 is a scanning electron microscope (SEM) image of a lithium-rich metal oxide according to an embodiment of this application. In some embodiments, as shown in FIG. 1, the lithium-rich metal oxide further includes: a compound $Li_zX$ on the surface of the lithium-rich metal oxide core, where X includes at least one of F$^-$, Cl$^-$, NO$_3^-$, or HSO$_4^{-1}$, and z = 1; or, X includes SO$_4^{2-}$, and z = 2. For example, the compound $Li_zX$ is LiF, LiCl, LiNO$_3$, or Li$_2$SO$_4$.

FIG. 2 is an SEM image of a lithium-rich metal oxide core before reaction. As shown in FIG. 2, before the compound $Li_zX$ is generated on the surface of the lithium-rich metal oxide core, a relatively large amount of residual lithium exists on the surface of the lithium-rich metal oxide core.

The compound $Li_zX$ may be a product of reaction between an ammonium salt and the residual lithium. After the reaction occurs, the residual lithium is converted into the compound $Li_zX$. Compared with the residual lithium, the

compound $Li_zX$ does not react with the binder PVDF to cause the binder to denature. The compound $Li_zX$ is of relatively high conductivity, and lithium ions can be deintercalated from the compound $Li_zX$. Therefore, the residual lithium on the surface of the lithium-rich metal oxide core is converted into the compound $Li_zX$, thereby improving the performance of the lithium-rich metal oxide, and facilitating the preparation of the positive electrode plate, and improving the charge capacity of the battery cell.

Optionally, as shown in FIG. 1 and FIG. 2, after the ammonium salt reacts with the residual lithium, the residual lithium on the surface of the lithium-rich metal oxide core is greatly reduced.

Optionally, the ammonium salt includes at least one of ammonium fluoride, ammonium chloride, ammonium nitrate, ammonium sulfate, or ammonium bisulfate.

In the above embodiment, the lithium-rich metal oxide includes the compound $Li_zX$ on the surface of the lithium-rich metal oxide core. On the one hand, the compound $Li_zX$ exerts little impact on the processing of the positive electrode plate. On the other hand, the compound $Li_zX$ exerts little impact on the deintercalation of lithium ions from the lithium-rich metal oxide core, thereby improving the charge capacity of the battery cell. Therefore, this technical solution improves the performance of the battery cell.

In some embodiments, the lithium-rich metal oxide includes a lithium-rich metal oxide core and a coating layer.

The coating layer coats the lithium-rich metal oxide core, and the coating layer includes the compound $Li_zX$.

Before the lithium-rich metal oxide is prepared from the lithium-rich metal oxide core and the ammonium salt, residual lithium exists on the surface of the lithium-rich metal oxide core. After the residual lithium reacts with the ammonium salt, at least a part of the residual lithium is converted into the compound $Li_zX$. In other words, after the residual lithium reacts with the ammonium salt, no residual lithium exists on the surface of the lithium-rich metal oxide core, that is, all the residual lithium is converted into the compound $Li_zX$. Alternatively, after the residual lithium reacts with the ammonium salt, residual lithium exists on the surface of the lithium-rich metal oxide core, that is, a part of the residual lithium is converted into the compound $Li_zX$, and the rest of the residual lithium still exists on the surface of the lithium-rich metal oxide core.

Optionally, the coating layer further includes residual lithium.

Optionally, the coating layer coats a part of the lithium-rich metal oxide core. The coating layer is generated at a position at which, before the reaction, the residual lithium is located.

Optionally, the coating layer coats the entire lithium-rich metal oxide core, thereby further improving the stability of the lithium-rich metal oxide.

In the above embodiment, the coating layer coats the lithium-rich metal oxide core, thereby reducing the risk that the lithium-rich metal oxide core reacts with water and carbon dioxide in the air, thereby improving the stability of the lithium-rich metal oxide. The coating layer includes the compound $Li_zX$, thereby improving the diffusion coefficient of lithium ions in the coating layer and the conductivity of the coating layer, and in turn, improving the charge capacity of the battery cell.

In some embodiments, a molar ratio of the compound $Li_zX$ to the lithium-rich metal oxide core is 0.01: 1 to 0.1: 1, and optionally, the molar ratio of the compound $Li_zX$ to the lithium-rich metal oxide core is 0.02: 1 to 0.05: 1.

In a case that the molar ratio of the compound $Li_zX$ to the lithium-rich metal oxide core is not less than 0.01: 1, the content of the compound $Li_zX$ further improves the ion conductivity of the lithium-rich metal oxide and the charge capacity of the battery cell.

In a case that the molar ratio of the compound $Li_zX$ to the lithium-rich metal oxide core is not higher than 0.1: 1, on the one hand, the amount of the raw materials required for preparing the compound $Li_zX$ can be controlled, thereby saving cost. On the other hand, the coating thickness of the $Li_zX$ on the lithium-rich metal oxide can be controlled.

In the above embodiment, the molar ratio of the compound $Li_zX$ to the lithium-rich metal oxide core is 0.01: 1 to 0.1: 1, thereby improving the charge capacity of the battery cell, and at the same time, controlling the cost of production and processing of the battery cell.

Optionally, the molar ratio of the compound $Li_zX$ to the lithium-rich metal oxide core is 0.02: 1 to 0.05: 1. This arrangement achieves a better trade-off between the charge capacity of the battery cell and the cost of production and processing of the battery cell.

In some embodiments, the compound $Li_zX$ is LiF. This arrangement further improves the performance of the lithium-rich metal oxide, thereby further improving the charge capacity of the battery cell.

In some embodiments, a volume median diameter $D_{v50}$ of the lithium-rich metal oxide is 2 $\mu$m to 10 $\mu$m, and optionally 4 $\mu$m to 8 $\mu$m.

The volume median diameter $D_{v50}$ may refer to a particle diameter corresponding to a point at which the cumulative volume distribution percent reaches 50% in a volume-based particle size distribution curve of a specimen.

The volume median diameter $D_{v50}$ of the lithium-rich metal oxide is related to the volume median diameter of the lithium-rich metal oxide core. The larger the volume median diameter of the lithium-rich metal oxide core, the larger the volume median diameter $D_{v50}$ of the lithium-rich metal oxide. The smaller the volume median diameter of the lithium-rich metal oxide core, the smaller the volume median diameter $D_{v50}$ of the lithium-rich metal oxide.

If the volume median diameter of the lithium-rich metal oxide is excessively large, the path for deintercalation of lithium ions from the lithium-rich metal oxide core is excessively long, thereby being detrimental to the deintercalation of lithium ions, and impairing the charge capacity of the battery cell prepared from the lithium-rich metal oxide. If the volume median diameter of the lithium-rich metal oxide is excessively small, the surface activity of the lithium-rich metal oxide is relatively high, agglomeration is prone to occur between the lithium-rich metal oxide particles, or between the lithium-rich metal oxide core particles, and the dispersivity of the particles is relatively low, thereby making it inconvenient to generate the compound $Li_zX$ uniformly on the surface of the lithium-rich metal oxide core.

In the above embodiments, the volume median diameter $D_{v50}$ of the lithium-rich metal oxide falls within the range of 2 $\mu$m to 10 $\mu$m, the path for deintercalation of lithium ions from the lithium-rich metal oxide core is moderate in length, thereby facilitating deintercalation of lithium ions, and improving the charge capacity of the battery cell prepared from the lithium-rich metal oxide. In addition, such a volume median diameter is also conducive to controlling the surface activity of the lithium-rich metal oxide, and suppressing the agglomeration between lithium-rich metal oxide particles or lithium-rich metal oxide core particles. Moreover, such a volume median diameter contributes to high dispersivity of particles, thereby making it convenient to distribute the compound $Li_zX$ uniformly on the surface of the lithium-rich metal oxide core. The appropriate value of the volume median diameter of the lithium-rich metal oxide contributes to a good trade-off between the uniformity of distribution of the compound $Li_zX$ of the lithium-rich metal oxide and the charge capacity of the battery cell.

In some embodiments, a specific surface area of the lithium-rich metal oxide is 0.2 $m^2$/g to 5 $m^2$/g, and optionally 0.5 $m^2$/g to 2 $m^2$/g. This arrangement further improves the capacity of the battery cell.

In some embodiments, the volume median diameter of the lithium-rich metal oxide is 4 $\mu$m to 8 $\mu$m, and the specific surface area of the lithium-rich metal oxide is 0.5 $m^2$/g to 2 $m^2$/g, thereby improving the charge capacity of the battery cell.

In some embodiments, the material of the lithium-rich metal oxide core includes $Li_aM^nO_y$, where $2 \leq a \leq 8$. The $Li_aM^nO_y$ includes one or more of $Li_2M^1O_2$, $Li_2M^2O_3$, $Li_3M^3O_4$, $Li_5M^4O_4$, $Li_6M^5O_4$, or $Li_8M^6O_6$. $M^1$ includes one or more of Ni, Co, Fe, Mn, Zn, Mg, Ca, Cu, or Mo; $M^2$ includes one or more of Mn, Sn, Mo, Ru, or Ir; $M^3$ includes one or more of V, Nb, Cr, or Mo; $M^4$ includes one or more of Fe, Cr, V, or Mo; $M^5$ includes one or more of Co, V, Cr, or Mo; $M^6$ includes Sn. Optionally, the $Li_aM^nO_y$ includes one or more of $Li_2NiO_2$, $Li_2CuO_2$, $Li_2MnO_3$, $Li_3VO_4$, $Li_3NbO_4$, $Li_5FeO_4$, $Li_6CoO_4$, or $Li_8SnO_6$. In this way, it is convenient to flexibly select an appropriate lithium-rich metal oxide core according to actual needs.

The above has described some embodiments of the lithium-rich metal oxide of this application, and the following will describe in detail some embodiments of a method for preparing the lithium-rich metal oxide. For the part not described in the embodiments of the method for preparing the lithium-rich metal oxide, reference may be made to the relevant description of the embodiment of the lithium-rich metal oxide.

**[Method for preparing a lithium-rich metal oxide]**

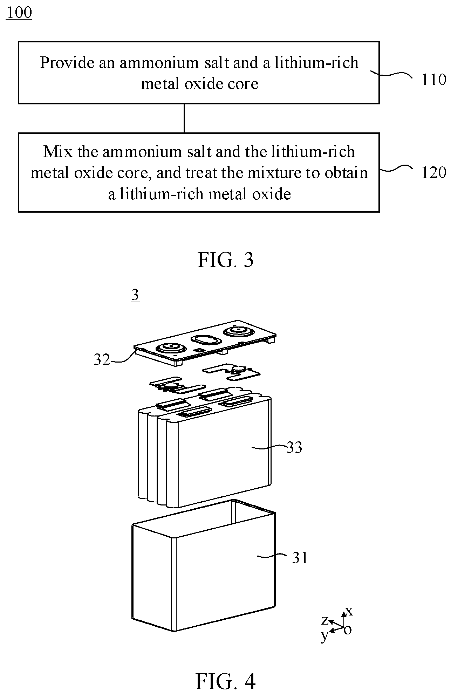

FIG. 3 is a schematic diagram of a method for preparing a lithium-rich metal oxide according to an embodiment of this application. As shown in FIG. 3, the method 100 includes step 110 and step 120.

Step 110: Providing an ammonium salt and a lithium-rich metal oxide core.

Step 120: Mixing the ammonium salt and the lithium-rich metal oxide core, and treating the mixture to obtain a lithium-rich metal oxide.

The lithium-rich metal oxide core is prone to react with water, carbon dioxide, and the like in the air. Therefore, residual lithium such as $Li_2CO_3$, LiOH, $Li_2O$, and the like exists on the surface of the lithium-rich metal oxide core. The ammonium salt can react with the residual lithium. After the reaction, at least a part of the residual lithium is converted into the compound $Li_zX$.

After the ammonium salt reacts with the residual lithium on the surface of the lithium-rich metal oxide core, the content of the residual lithium on the surface of the lithium-rich metal oxide core decreases, for example, decreases to less than 0.5% or even 0.1% of the mass of the lithium-rich metal oxide.

Compared with the residual lithium, the compound $Li_zX$ is of relatively high conductivity, and exerts less impact on the deintercalation of lithium ions from the lithium-rich metal oxide, and exerts less impact on the binder PVDF. In addition, at least a part of the surface of the lithium-rich metal oxide is the compound $Li_zX$ or a combination of the compound $Li_zX$ and the residual lithium, thereby being not prone to react with water and carbon dioxide in the air.

In an embodiment of this application, the lithium-rich metal oxide prepared by the method 100 is of high conductivity and stability. When applied to a battery cell, the lithium-rich metal oxide of this application improves the performance of the battery cell.

In some embodiments, the treatment includes: sintering in an inert atmosphere for 2 to 10 hours, and optionally 4 to 8 hours; and/or the treatment is performed at a temperature of 100 °C to 600 °C, and optionally 200 °C to 500 °C.

Optionally, the inert atmosphere includes one or more of nitrogen, argon, or helium. In this way, it is convenient to select an appropriate inert gas according to actual needs.

In a case that the sintering time in the inert atmosphere is not less than 2 hours, the inert atmosphere is favorable for the ammonium salt to fully react with the residual lithium on the surface of the lithium-rich metal oxide core. In a case that the sintering time in the inert atmosphere is not more than 10 hours, the sintering time is appropriate and conducive to reducing cost.

In a case that the treatment temperature is not less than 100 °C, the temperature is favorable for the ammonium salt to fully react with the residual lithium on the surface of the lithium-rich metal oxide core. In a case that the treatment temperature is not higher than 600 °C, the temperature is favorable for maintaining an appropriate content of active lithium in the lithium-rich metal oxide core.

Optionally, by sintering in an inert atmosphere for 4 to 8 hours, the reaction between the ammonium salt and the residual lithium is sufficient, and at the same time, the production cost is not high.

Optionally, by keeping the treatment temperature within the range of 200 °C to 500 °C, the reaction between the ammonium salt and the residual lithium is sufficient, and the content of active lithium in the lithium-rich metal oxide core is high enough.

In the above embodiment, the reasonable setting of the sintering time and treatment temperature facilitates the reaction between the ammonium salt and the residual lithium on the surface of the lithium-rich metal oxide core, so as to obtain the compound $Li_zX$ on the surface of the lithium-rich metal oxide core after completion of the reaction. The reasonable setting is also conducive to saving cost and reducing the consumption of active lithium in the lithium-rich metal oxide core.

Optionally, the ammonium salt includes at least one of ammonium fluoride, ammonium chloride, ammonium nitrate, ammonium sulfate, or ammonium bisulfate; and optionally, the ammonium salt includes ammonium fluoride. In this way, it is convenient to select the type of ammonium salt flexibly according to actual conditions.

In some embodiments, a molar ratio of the ammonium salt to the lithium-rich metal oxide core is (0.021 to 0.15): 1, and optionally 0.03: 1 to 0.08: 1. In this way, the ratio of the ammonium salt to the lithium-rich metal oxide core is set reasonably to generate the desired compound $Li_zX$ without incurring adverse effects such as waste caused by excessive ammonium salt content.

In some embodiments, the method 100 further includes: performing airflow pulverization and sieving on a product of the treatment to obtain the lithium-rich metal oxide. In this way, the lithium-rich metal oxide of an appropriate particle size is obtained conveniently.

In some embodiments, the material of the lithium-rich metal oxide core includes $Li_aMnO_y$, where $2 \leq a \leq 8$. The $Li_aMnO_y$ includes one or more of $Li_2M^1O_2$, $Li_2M^2O_3$, $Li_3M^3O_4$, $Li_5M^4O_4$, $Li_6M^5O_4$, or $Li_8M^6O_6$. $M^1$ includes one or more of Ni, Co, Fe, Mn, Zn, Mg, Ca, Cu, or Mo; $M^2$ includes one or more of Mn, Sn, Mo, Ru, or Ir; $M^3$ includes one or more of V, Nb, Cr, or Mo; $M^4$ includes one or more of Fe, Cr, V, or Mo; $M^5$ includes one or more of Co, V, Cr, or Mo; $M^6$ includes Sn. Optionally, the $Li_aMnO_y$ includes one or more of $Li_2NiO_2$, $Li_2CuO_2$, $Li_2MnO_3$, $Li_3VO_4$, $Li_3NbO_4$, $Li_5FeO_4$, $Li_6CoO_4$, or $Li_8SnO_6$. In this way, it is convenient to flexibly select an appropriate lithium-rich metal oxide core according to actual needs.

In some embodiments, the treatment temperature is not higher than 500 °C. Optionally, the treatment temperature is not higher than 300 °C. In this way, a lithium-rich metal oxide 1 coated with a uniform and dense coating layer can be achieved at a relatively low temperature.

In some embodiments, the step of providing a lithium-rich metal oxide core includes the following substeps: (i) mixing a lithium source and a manganese source at a molar ratio of (a+0.05): 1 to a: 1, and then sintering the mixture for a first time in an inert atmosphere for 4 to 8 hours, where the sintering temperature is 400 °C to 600 °C, the lithium source includes one or more of lithium oxide, lithium carbonate, lithium oxalate, lithium acetate, or lithium hydroxide; the manganese source includes one or more of manganese oxide, hydroxide, halide, sulfate salt, carbonate salt, nitrate salt, oxalate salt, acetate salt, sulfide, or nitride; optionally, the sintering temperature is 450 °C to 550 °C; and optionally, the inert atmosphere includes one or more of nitrogen, argon, or helium; and (ii) performing airflow pulverization on the product of the first-time sintering to obtain a lithium-rich metal oxide core. In this way, it is convenient to prepare an appropriate lithium-rich metal oxide core, so as to facilitate the subsequent preparation of a lithium-rich metal oxide. In addition, this method can prepare a lithium-rich metal oxide core at a relatively low sintering temperature, thereby reducing cost and alleviating the volatilization of active lithium.

**[Positive electrode plate]**

This application provides a positive electrode plate. The positive electrode plate includes the lithium-rich metal oxide prepared in any one of the embodiments of this application.

**[Battery cell]**

This application provides a battery cell. The battery cell includes the positive electrode plate disclosed in the above embodiment.

The shape of the battery cell is not particularly limited in this application, and may be cylindrical, prismatic or in any other shape.

FIG. 4 is a schematic diagram of a battery cell according to an embodiment of this application. As shown in FIG. 4, the battery cell 4 includes a housing 31, a cover plate 32, and an electrode assembly 33 disposed in the housing 31.

The electrode assembly 33 may be prepared from the positive electrode plate of this application, a negative electrode plate, and a separator by a winding or stacking process.

Optionally, the battery cell 3 further includes an electrolyte. The electrolyte may be solid, semi-solid, or liquid. The form of the electrolyte is not particularly limited herein.

In some embodiments, the battery cell may be assembled into a battery module. The battery module may include one or more battery cells, and the specific number of battery cells in a battery module may be selected by a person skilled in the art depending on the application scenario and capacity of the battery module.

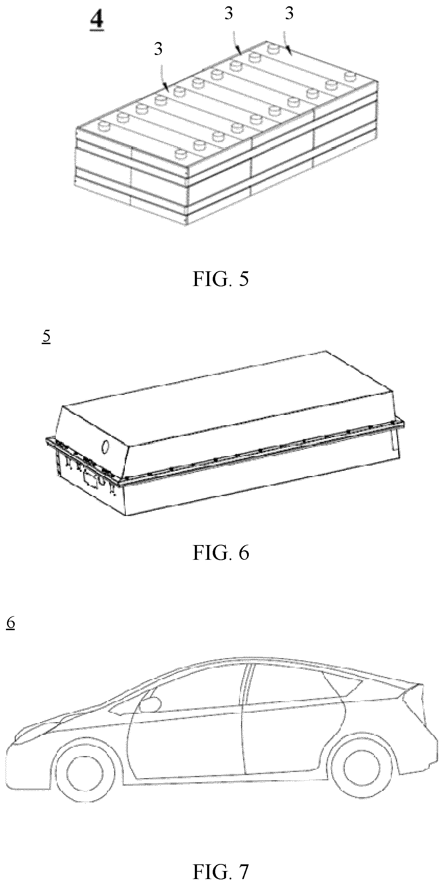

FIG. 5 is a schematic diagram of a battery module according to an embodiment of this application. Referring to FIG. 5, in the battery module 4, a plurality of battery cells 3 may be arranged sequentially along a length direction of the battery module 4. Alternatively, the secondary batteries may be arranged in any other manner. Further, the plurality of battery cells 3 may be fixed by a fastener.

Optionally, the battery module 4 may further include a shell that provides an accommodation space. The plurality of battery cells 3 are accommodated in the accommodation space.

## [Battery]

This application provides a battery. The battery includes the battery cell disclosed in the above embodiment.

FIG. 6 is a schematic diagram of a battery according to an embodiment of this application. As shown in FIG. 6, this application provides a battery 5. The battery includes the battery cell 3 disclosed in any one of the above embodiments.

The battery cell 3 may directly form the battery 5. Alternatively, a plurality of sodium metal battery cells form a battery module first, and then a plurality of battery modules form the battery 5.

## [Electrical device]

This application provides an electrical device. The electrical device includes the battery disclosed in the above embodiment.

FIG. 7 is a schematic diagram of an electrical device according to an embodiment of this application. As shown in FIG. 7, this application provides an electrical device 6. The electrical device includes the battery 5 disclosed in the above embodiment.

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

## Embodiments

### Embodiment 1

In Embodiment 1, a lithium-rich metal oxide core reacts with an ammonium salt at 350 °C for 6 hours to obtain a lithium-rich metal oxide. The lithium-rich metal oxide core is $Li_5FeO_4$. The molar ratio m1 of the ammonium salt $NH_4F$ to the lithium-rich metal oxide core $Li_5FeO_4$ is 0.05: 1.

The compound $Li_zX$ on the surface of the lithium-rich metal oxide core is LiF. The molar ratio m2 of the compound LiF to the lithium-rich metal oxide core $Li_5FeO_4$ is 0.03: 1. The mass percent k of the residual lithium on the surface of the lithium-rich metal oxide core is 0.021 wt%. The lithium-ion diffusion coefficient D of the lithium-rich metal oxide is $2.8 \times 10^{-11}$ $cm^2/s$. The resistivity $\rho$ of the lithium-rich metal oxide is 0.22 $\Omega\cdot cm$. The specific surface area s of the lithium-rich metal oxide is 1.215 $m^2/g$.

### Embodiments 2 to 5

Embodiments 2 to 5 differ from Embodiment 1 in the molar ratio m1 of the ammonium salt $NH_4F$ to the lithium-rich metal oxide core $Li_5FeO_4$.

Correspondingly, the mass percent k of the residual lithium on the surface of the lithium-rich metal oxide core, the lithium-ion diffusion coefficient D of the lithium-rich metal oxide, the resistivity $\rho$ of the lithium-rich metal oxide, and the molar ratio m2 of the compound LiF to the lithium-rich metal oxide core $Li_5FeO_4$ also change accordingly. Specific parameters are set out in Table 1.

**Embodiments 6 to 9**

Embodiments 6 to 9 differ from Embodiment 1 in the reaction temperature T1 of the reaction between the ammonium salt $NH_4F$ and the lithium-rich metal oxide core $Li_5FeO_4$.
Correspondingly, the mass percent k of the residual lithium on the surface of the lithium-rich metal oxide core, the lithium-ion diffusion coefficient D of the lithium-rich metal oxide, the resistivity $\rho$ of the lithium-rich metal oxide, and the molar ratio m2 of the compound LiF to the lithium-rich metal oxide core $Li_5FeO_4$ also change accordingly. Specific parameters are set out in Table 1.

**Embodiments 10 to 13**

Embodiments 10 to 13 differ from Embodiment 1 in the reaction time L of the reaction between the ammonium salt $NH_4F$ and the lithium-rich metal oxide core $Li_5FeO_4$.
Correspondingly, the mass percent k of the residual lithium on the surface of the lithium-rich metal oxide core, the lithium-ion diffusion coefficient D of the lithium-rich metal oxide, the resistivity $\rho$ of the lithium-rich metal oxide, and the molar ratio m2 of the compound LiF to the lithium-rich metal oxide core $Li_5FeO_4$ also change accordingly. Specific parameters are set out in Table 1.

**Embodiments 14 to 17**

Embodiments 14 to 17 differ from Embodiment 1 in the volume median diameter $D_{v50}$ of the lithium-rich metal oxide.
Correspondingly, the mass percent k of the residual lithium on the surface of the lithium-rich metal oxide core, the lithium-ion diffusion coefficient D of the lithium-rich metal oxide, and the specific surface area s of the lithium-rich metal oxide also change accordingly. Specific parameters are set out in Table 1.

**Embodiments 18 to 21**

Embodiments 18 to 21 differ from Embodiment 1 in the ammonium salt.
Correspondingly, the lithium-ion diffusion coefficient D of the lithium-rich metal oxide also changes accordingly. Specific parameters are set out in Table 1.

**Embodiment 22**

Embodiment 22 differs from Embodiment 1 in: the molar ratio m1 of the ammonium salt $NH_4F$ to the lithium-rich metal oxide core $Li_5FeO_4$, and the reaction temperature T1.

**Embodiment 23**

Embodiment 23 differs from Embodiment 1 in: the molar ratio m1 of the ammonium salt $NH_4F$ to the lithium-rich metal oxide core $Li_5FeO_4$, the reaction temperature T1, and the reaction time L.

**Embodiment 24**

Embodiment 24 differs from Embodiment 1 in: the molar ratio m1 of the ammonium salt $NH_4F$ to the lithium-rich metal oxide core $Li_5FeO_4$, the reaction time L, and the volume median diameter $D_{v50}$ of the lithium-rich metal oxide.

**Embodiment 25**

Embodiment 25 differs from Embodiment 1 in: the reaction temperature T1 of the reaction between the ammonium salt $NH_4F$ and the lithium-rich metal oxide core $Li_5FeO_4$, and the volume median diameter $D_{v50}$ of the lithium-rich metal oxide.

**Embodiments 26 to 29**

Embodiments 26 to 29 differ from Embodiment 1 in the material of the lithium-rich metal oxide core. The materials of the lithium-rich metal oxide core in these embodiments are: $Li_6CoO_4$, $Li_2CuO_2$, $Li_2NiO_2$, and $Li_3NbO_4$, respectively.

**Comparative Embodiment 1**

Comparative Embodiment 1 differs from Embodiment 1 in that: the lithium-rich metal oxide core $Li_5FeO_4$ is not reacted with the ammonium salt to prepare the lithium-rich metal oxide; and the lithium-rich metal oxide core $Li_5FeO_4$ is used as the lithium-rich metal oxide.

**Comparative Embodiments 2 to 5**

Comparative Embodiments 2 to 5 differ from Comparative Embodiment 1 in the lithium-rich metal oxide core.

**[Method for preparing a lithium-rich metal oxide]**

Mixing well the lithium-rich metal oxide core and an ammonium salt, and then sintering the mixture in an inert atmosphere; after completion of the sintering, performing airflow pulverization and sieving on the sintered product to obtain a lithium-rich metal oxide.

**Performance test**

**[Testing the content of residual lithium]**

Titrating the lithium-rich metal oxide by using a hydrochloric acid standard solution, so as to measure the content of residual lithium of the lithium-rich metal oxide.

The test process is described here by using an example in which the residual lithium on the surface of the lithium-rich metal oxide includes lithium carbonate and lithium hydroxide. The test process includes: Adding m1 grams of lithium-rich metal oxide into b mL of deionized water, and stirring the solution at a speed of 200 rpm for 5 minutes; titrating the lithium-rich metal oxide by using a hydrochloric acid standard solution (the concentration of the hydrochloric acid is c mol/L) (the hydrochloric acid reacts with the lithium carbonate and lithium hydroxide in the lithium-rich metal oxide), using a composite pH electrode as an indicator electrode, determining a titration endpoint with the aid of jumps caused by the potential change, and calculating the content of residual lithium of the lithium-rich metal oxide.

During the titration reaction, potential jumps $E_1$ and $E_2$ are generated. At the potential jump $E_1$, the lithium hydroxide reacts with the hydrochloric acid to generate lithium chloride, and the lithium carbonate reacts with the hydrochloric acid to generate lithium chloride and lithium bicarbonate. The volume of the hydrochloric acid consumed at this time is $V_1$. At the potential jump $E_2$, the lithium bicarbonate reacts with the hydrochloric acid to generate lithium chloride. The volume of the hydrochloric acid consumed at this time is $V_2$. The content of the residual lithium can be calculated based on the consumed hydrochloric acid volumes $V_1$ and $V_2$.

**[Testing the compound $Li_zX$]**

Taking m grams of lithium-rich metal oxide to test the content of the residual lithium. Based on the mass of the lithium-rich metal oxide, the mass fraction of the residual lithium is measured, denoted as h%, and then the mole number of lithium ions in the residual lithium is $(h \times m)/M_{Li}$ ($M_{Li}$ is the relative atomic mass of the lithium element).

Taking m grams of lithium-rich metal oxide, performing an Inductively Coupled Plasma-Atomic Emission Spectroscopy (ICP-AES) test to obtain an aggregate lithium-ion mass fraction k%, denoting the mass fraction of the metal Mn as t%, and then calculating an aggregate mole number of lithium ions as $(k \times m)/M_{Li}$, and calculating the mole number of metal Mn as $(t \times m)/Mn$ (Mn is the relative atomic mass of the metal element Mn).

The molar ratio of $Li_zX$ to the lithium-rich metal oxide core $Li_aM^nO_y$ is $f = [(k \times m)/M_{Li} - (h \times m)/M_{Li} - (t \times m) \times a/Mn]/[(t \times m)/M_{Li}]$, and then $f = [(k - h) \times Mn]/(M_{Li} \times t) - a$.

The ICP-AES test may be performed in an ICP-AES spectrometer (for example, ICAP7400 from Thermo Fisher Scientific Inc., USA). An exemplary test method is as follows: Adding 2 grams of metal oxide material into an acid solution (for example, aqua regia) for digestion, where the material may be digested while being stirred (for example, through mechanical stirring or microwave stirring), and the digestion time may be 30 minutes; and adding the digested solution into an ICAP7400 spectrometer to quantitatively analyze the chemical composition elements in the metal oxide material.

**[Measuring the specific surface area]**

The BET specific surface area of the positive active material bears the meaning well known in the art, and may be measured by using an instrument and method well known in the art. For example, the specific surface area is measured by a gas adsorption method with reference to the test standard GB/T19587 2017. An exemplary measurement method is as follows: Taking a lithium-rich metal oxide material as a specimen, and immersing the specimen in 196 °C liquid nitrogen; measuring the adsorption amount of nitrogen on a solid surface at different relative pressures that range from 0.05 to 0.30; and determining a monolayer adsorption amount of the specimen based on the BET multilayer adsorption theory and formula, and calculating the specific surface area of the lithium-rich metal oxide material.

[Determining the volume median diameter $D_{v50}$ of the lithium-rich metal oxide]

The volume median diameter $D_{v50}$ of the lithium-rich metal oxide may be determined by using a laser particle size analyzer with reference to the standard GB/T 19077-2016 *Particle Size Analysis-Laser Diffraction Method.*

[Measuring the resistivity of the lithium-rich metal oxide]

Drying lithium-rich metal oxide powder, and weighing out an appropriate amount of the powder as a specimen. Measuring the powder resistivity of the specimen by using a powder resistivity tester (ST2722 digital four-point probe tester, manufactured by Suzhou Jingge Electronics Co., Ltd.) with reference to the standard GB/T 30835-*2014 Carbon Composite Lithium Iron Phosphate Lithium-Rich Metal Oxide for Lithium-ion Battery,* during which the test pressure is 20 MPa.

[Determining the lithium-ion diffusion coefficient]

The lithium-ion diffusion coefficient may be determined by a conventional method in the art, such as coin cell cyclic voltammetry (CV), electrochemical impedance spectroscopy (EIS), Galvanostatic Intermittent Titration Technique (GITT), or Potentiostatic Intermittent Titration Technique (PITT), and calculated based on the Fick's first law and the Fick's second law.

Described by using the GITT as an example, the steps for determining the lithium-ion diffusion coefficient of lithium-rich metal oxide as a positive active material are as follows: Grinding the lithium-rich metal oxide material to let the material enter a powder microelectrode, connecting the powder microelectrode to an electrochemical workstation, and performing Coulometric titration, during which the pulse current is 20 μA, the titration time is 1 h, and the interval is 4 h. (Note: In order to compare the effect caused by different pulse currents and titration times, a test with a pulse current of 10 μA and a titration time of 10 min may be performed in parallel.) Calculating the lithium-ion diffusion coefficient by use of the following formula after a GITT curve is obtained:

$$D = \frac{4}{\pi}\left(\frac{V_m}{AFn}\right)^2 \left[I_0\left(\frac{dE}{dx}\right) \Big/ \left(\frac{dE}{d\sqrt{t}}\right)\right]^2$$

$(t \ll L^2/D)$. In the formula above, D is the lithium-ion diffusion coefficient; $I_0$ is the applied current 20 μA; $V_m$ is a molar volume of the active material lithium-rich metal oxide; F is a Faraday's constant; A is the surface area of the electrode; n is the number of electrons participating in the reaction, also understood as the number of electric charges carried by lithium ions, that is, n may be 1; dE/dx is the slope of a Coulometric titration curve, that is, the slope of a curve of an open-circuit potential vs a concentration value of lithium ions in the electrode; and $\frac{dE}{d\sqrt{t}}$ is the slope of a curve of a polarization voltage vs $\sqrt{t}$. For details, references may be made to: Xie et al., Solid State Ionics, 2007, 178:1218-1224; Yang et al., Electrochimica Acta, 2012, 66:88-93.

[Preparing a lithium-ion battery]

Preparing a positive electrode plate: Dissolving lithium-rich metal oxide, polyvinylidene fluoride (PVDF) as a binder, and acetylene black as a conductive agent at a mass ratio of 97: 2: 1 in an N-methylpyrrolidone (NMP) solvent, and stirring the mixture well to form a positive electrode slurry; and applying the positive electrode slurry onto a positive current collector aluminum foil evenly, and then performing oven-drying, cold-pressing, and slitting to obtain a positive electrode plate. During the preparation of the positive electrode plate, the lithium-rich metal oxide serves as an active material, and no other active materials are added.

Preparing a negative electrode plate: Dispersing artificial graphite as a negative active material, acetylene black as a conductive agent, styrene-butadiene rubber (SBR) as a binder, and sodium carboxymethyl cellulose (CMC-Na) as a thickener at a mass ratio of 96: 1.5: 1.5: 1.0 in deionized water, and stirring well to make a negative electrode slurry; and applying the negative electrode slurry onto a negative current collector copper foil, and then performing oven-drying, cold-pressing, and slitting to obtain a negative electrode plate.

Separator: Using a polypropylene film as a separator.

Preparing an electrolyte solution: Mixing ethylene carbonate (EC), ethyl methyl carbonate (EMC), and diethyl carbonate (DEC) at a volume ratio of 1: 1: 1, and dissolving $LiPF_6$ in the forgoing solution homogeneously to obtain an electrolyte solution. In the electrolyte solution, the concentration of the $LiPF_6$ is 1 mol/L.

Preparing a lithium-ion battery: Stacking the positive electrode plate, the separator, and the negative electrode plate in sequence, and winding the stacked structure to obtain an electrode assembly. Placing the electrode assembly into an outer package, injecting the electrolyte solution prepared above, and performing steps such as packaging, standing, chemical formation, and aging to obtain a lithium-ion battery.

**[Testing the first-cycle charge capacity of a lithium-ion battery]**

Charging an assembled lithium-ion battery at a constant current of 0.1C until the voltage reaches 4.25 V, leaving the battery to stand for 5 minutes, recording the first-cycle charge capacity of the lithium-ion battery at this time. Dividing the first-cycle charge capacity of the battery by the mass of the lithium-rich metal oxide to obtain the first-cycle gravimetric charge capacity of the lithium-ion battery.

**Table 1 Specific parameters and experimental results of embodiments and comparative embodiments (To be continued)**

| | | Lithium-rich metal oxide core | m1 | T1 (°C) | L (h) | $D_{v50}$ (μm) | s (m²/g) | Ammonium salt |
|---|---|---|---|---|---|---|---|---|
| | Embodiment 1 | $Li_5FCO_4$ | 0.05 | 350 | 6 | 6 | 1.215 | $NH_4F$ |
| | Embodiment 2 | $Li_5FCO_4$ | 0.02 | 350 | 6 | 6 | 1.216 | $NH_4F$ |
| | Embodiment 3 | $Li_5FCO_4$ | 0.03 | 350 | 6 | 6 | 1.214 | $NH_4F$ |
| | Embodiment 4 | $Li_5FCO_4$ | 0.08 | 350 | 6 | 6 | 1.217 | $NH_4F$ |
| | Embodiment 5 | $Li_5FeO_4$ | 0.15 | 350 | 6 | 6 | 1.213 | $NH_4F$ |
| | Embodiment 6 | $Li_5FCO_4$ | 0.05 | 100 | 6 | 6 | 1.214 | $NH_4F$ |
| | Embodiment 7 | $Li_5FCO_4$ | 0.05 | 200 | 6 | 6 | 1.215 | $NH_4F$ |
| | Embodiment 8 | $Li_5FCO_4$ | 0.05 | 500 | 6 | 6 | 1.213 | $NH_4F$ |
| | Embodiment 9 | $Li_5FCO_4$ | 0.05 | 600 | 6 | 6 | 1.217 | $NH_4F$ |
| | Embodiment 10 | $Li_5FCO_4$ | 0.05 | 350 | 2 | 6 | 1.213 | $NH_4F$ |
| | Embodiment 11 | $Li_5FCO_4$ | 0.05 | 350 | 4 | 6 | 1.215 | $NH_4F$ |
| | Embodiment 12 | $Li_5FCO_4$ | 0.05 | 350 | 8 | 6 | 1.215 | $NH_4F$ |
| | Embodiment 13 | $Li_5FCO_4$ | 0.05 | 350 | 10 | 6 | 1.214 | $NH_4F$ |
| | Embodiment 14 | $Li_5FCO_4$ | 0.05 | 350 | 6 | 2 | 4.832 | $NH_4F$ |
| | Embodiment 15 | $Li_5FCO_4$ | 0.05 | 350 | 6 | 4 | 2.111 | $NH_4F$ |
| | Embodiment 16 | $Li_5FCO_4$ | 0.05 | 350 | 6 | 8 | 0.531 | $NH_4F$ |
| | Embodiment 17 | $Li_5FCO_4$ | 0.05 | 350 | 6 | 10 | 0.201 | $NH_4F$ |
| | Embodiment 18 | $Li_5FCO_4$ | 0.05 | 350 | 6 | 6 | 1.215 | $NH_4Cl$ |
| | Embodiment 19 | $Li_5FCO_4$ | 0.05 | 350 | 6 | 6 | 1.214 | $NH_4NO_3$ |
| | Embodiment 20 | $Li_5FCO_4$ | 0.05 | 350 | 6 | 6 | 1.215 | $NH_4HSO_4$ |
| | Embodiment 21 | $Li_5FCO_4$ | 0.025 | 350 | 6 | 6 | 1.216 | $(NH_4)_2SO_4$ |
| | Embodiment 22 | $Li_5FCO_4$ | 0.01 | 80 | 6 | 6 | 1.214 | $NH_4F$ |
| | Embodiment 23 | $Li_5FCO_4$ | 0.2 | 700 | 12 | 6 | 1.217 | $NH_4F$ |
| | Embodiment 24 | $Li_5FCO_4$ | 0.01 | 350 | 1 | 1 | 6.235 | $NH_4F$ |
| | Embodiment 25 | $Li_5FCO_4$ | 0.05 | 50 | 6 | 12 | 0.126 | $NH_4F$ |
| | Embodiment 26 | $Li_6CoO_4$ | 0.05 | 350 | 6 | 6 | 1.215 | $NH_4F$ |

(continued)

| | Lithium-rich metal oxide core | m1 | T1 (°C) | L (h) | $D_{v50}$ (μm) | s (m²/g) | Ammonium salt |
|---|---|---|---|---|---|---|---|
| Embodiment 27 | $Li_2CuO_2$ | 0.05 | 350 | 6 | 6 | 1.217 | $NH_4F$ |
| Embodiment 28 | $Li_2NiO_2$ | 0.05 | 350 | 6 | 6 | 1.214 | $NH_4F$ |
| Embodiment 29 | $Li_3NbO_4$ | 0.05 | 350 | 6 | 6 | 1.213 | $NH_4F$ |
| Comparative Embodiment 1 | $Li_5FeO_4$ | \ | \ | \ | 6 | 1.215 | \ |
| Comparative Embodiment 2 | $Li_6CoO_4$ | \ | \ | \ | 6 | 1.215 | \ |
| Comparative Embodiment 3 | $Li_2CuO_2$ | \ | \ | \ | 6 | 1.217 | \ |
| Comparative Embodiment 4 | $Li_2NiO_2$ | \ | \ | \ | 6 | 1.214 | \ |
| Comparative Embodiment 5 | $Li_3NbO_4$ | \ | \ | \ | 6 | 1.213 | \ |

**Table 1 Specific parameters and experimental results of embodiments and comparative embodiments (Continued)**

| | $Li_zX$ | m2 | k (wt%) | D (cm²/s) | ρ (Ω·cm) | Q (mAh/g) |
|---|---|---|---|---|---|---|
| Embodiment 1 | LiF | 0.03 | 0.021 | $2.8\times10^{-11}$ | 0.22 | 682 |
| Embodiment 2 | LiF | 0.015 | 0.446 | $1.7\times10^{-14}$ | 0.65 | 621 |
| Embodiment 3 | LiF | 0.022 | 0.387 | $3.2\times10^{-13}$ | 0.44 | 657 |
| Embodiment 4 | LiF | 0.028 | 0.369 | $1.1\times10^{-12}$ | 0.45 | 660 |
| Embodiment 5 | LiF | 0.026 | 0.432 | $2.4\times10^{-14}$ | 0.64 | 628 |
| Embodiment 6 | LiF | 0.011 | 0.424 | $3.4\times10^{-14}$ | 0.66 | 620 |
| Embodiment 7 | LiF | 0.018 | 0.309 | $8.2\times10^{-13}$ | 0.41 | 662 |
| Embodiment 8 | LiF | 0.02 | 0.287 | $1.2\times10^{-12}$ | 0.39 | 665 |
| Embodiment 9 | LiF | 0.012 | 0.475 | $4.2\times10^{-14}$ | 0.57 | 638 |
| Embodiment 10 | LiF | 0.017 | 0.398 | $8.7\times10^{-14}$ | 0.53 | 641 |
| Embodiment 11 | LiF | 0.021 | 0.312 | $2.6\times10^{-13}$ | 0.38 | 665 |
| Embodiment 12 | LiF | 0.024 | 0.357 | $1.4\times10^{-13}$ | 0.39 | 664 |
| Embodiment 13 | LiF | 0.025 | 0.412 | $3.2\times10^{-14}$ | 0.52 | 653 |
| Embodiment 14 | LiF | 0.03 | 0.088 | $8.7\times10^{-12}$ | 0.26 | 677 |
| Embodiment 15 | LiF | 0.03 | 0.083 | $1.1\times10^{-11}$ | 0.24 | 679 |
| Embodiment 16 | LiF | 0.03 | 0.082 | $1.2\times10^{-11}$ | 0.23 | 680 |
| Embodiment 17 | LiF | 0.03 | 0.085 | $9.2\times10^{-12}$ | 0.25 | 676 |
| Embodiment 18 | LiCl | 0.03 | 0.083 | $3.2\times10^{-12}$ | 0.23 | 672 |
| Embodiment 19 | $LiNO_3$ | 0.03 | 0.082 | $2.0\times10^{-12}$ | 0.24 | 670 |
| Embodiment 20 | $LiHSO_4$ | 0.03 | 0.084 | $6.1\times10^{-13}$ | 0.23 | 668 |
| Embodiment 21 | $Li_2SO_4$ | 0.03 | 0.083 | $5.2\times10^{-13}$ | 0.24 | 664 |
| Embodiment 22 | LiF | 0.011 | 0.489 | $1.3\times10^{-15}$ | 0.98 | 608 |
| Embodiment 23 | LiF | 0.023 | 0.471 | $1.7\times10^{-15}$ | 0.95 | 612 |
| Embodiment 24 | LiF | 0.028 | 0.475 | $1.4\times10^{-15}$ | 0.96 | 609 |
| Embodiment 25 | LiF | 0.013 | 0.483 | $1.1\times10^{-15}$ | 0.99 | 605 |
| Embodiment 26 | LiF | 0.032 | 0.083 | $1.3\times10^{-11}$ | 0.25 | 815 |

(continued)

|  | Li$_z$X | m2 | k (wt%) | D (cm$^2$/s) | ρ (Ω·cm) | Q (mAh/g) |
|---|---|---|---|---|---|---|
| Embodiment 27 | LiF | 0.026 | 0.078 | $5.6 \times 10^{-10}$ | 0.2 | 418 |
| Embodiment 28 | LiF | 0.026 | 0.078 | $5.7 \times 10^{-10}$ | 0.2 | 420 |
| Embodiment 29 | LiF | 0.028 | 0.08 | $8.3 \times 10^{-11}$ | 0.21 | 388 |
| Comparative Embodiment 1 | \ | \ | 6.855 | $1.8 \times 10^{-23}$ | 234.45 | 521 |
| Comparative Embodiment 2 | \ | \ | 10.235 | $3.1 \times 10^{-24}$ | 342.11 | 673 |
| Comparative Embodiment 3 | \ | \ | 3.238 | $6.5 \times 10^{-18}$ | 115.78 | 321 |
| Comparative Embodiment 4 | \ | \ | 3.234 | $6.9 \times 10^{-18}$ | 113.94 | 322 |
| Comparative Embodiment 5 | \ | \ | 4.221 | $5.8 \times 10^{-20}$ | 189.86 | 257 |

As shown in Table 1, Table 1 shows specific parameters and experimental results of different embodiments and comparative embodiments. In Table 1, k represents the mass percent of residual lithium on the surface of the lithium-rich metal oxide core in the lithium-rich metal oxide based on 100 wt% as a total mass of the lithium-rich metal oxide; D represents the lithium-ion diffusion coefficient; ρ represents the resistivity of the lithium-rich metal oxide; T1 represents the reaction temperature of the reaction between the ammonium salt and the residual lithium; L represents the reaction time of the reaction between the ammonium salt and the residual lithium; Li$_z$X represents the compound on the surface of the lithium-rich metal oxide core; m1 represents the molar ratio of the ammonium salt to the lithium-rich metal oxide core; m2 represents the molar ratio of the compound Li$_z$X to the lithium-rich metal oxide core; D$_{v50}$ represents the volume median diameter of the lithium-rich metal oxide; s represents the specific surface area of the lithium-rich metal oxide; and Q represents the first-cycle charge capacity of the lithium-ion battery.

As can be seen from Embodiments 1 to 25 and Comparative Embodiment 1, the mass percent of residual lithium in Comparative Embodiment 1 is relatively high, and the charge capacity of the lithium-ion battery in Comparative Embodiment 1 is significantly lower than the charge capacity of the lithium-ion battery in Embodiments 1 to 25 of this application. As can be seen from Embodiments 26 to 29 and Comparative Embodiments 2 to 5, the mass percent of residual lithium in Comparative Embodiments 2 to 5 is relatively high, and the charge capacity of the lithium-ion batteries in Comparative Embodiments 2 to 5 is significantly lower than the charge capacity of the lithium-ion batteries in Embodiments 26 to 29 of this application. As can be seen from Embodiments 1 to 5 and Embodiments 22 to 24, a reasonable value of the molar ratio of the ammonium salt to the lithium-rich metal oxide core is conducive to obtaining a more suitable molar ratio of the lithium-containing compound Li$_z$X to the lithium-rich metal oxide core, reducing the mass percent of residual lithium on the surface of the lithium-rich metal oxide core, increasing the lithium-ion diffusion coefficient, reducing the resistivity of the lithium-rich metal oxide, and increasing the charge capacity of the lithium-ion battery cell. As can be seen from Embodiments 6 to 9, Embodiments 10 to 13, and Embodiments 23 to 24, the reasonable values of the reaction temperature and reaction time of the reaction between the ammonium salt and the lithium-rich metal oxide core are conducive to obtaining a suitable molar ratio of the lithium-containing compound Li$_z$X to the lithium-rich metal oxide core, reducing the mass percent of residual lithium on the surface of the lithium-rich metal oxide core, increasing the lithium-ion diffusion coefficient, reducing the resistivity of the lithium-rich metal oxide, and increasing the charge capacity of the lithium-ion battery cell. As can be seen from Embodiments 14 to 17 and Embodiments 24 to 25, a reasonable value of the volume median diameter of the lithium-rich metal oxide is conducive to obtaining a suitable specific surface area of the lithium-rich metal oxide, reducing the mass percent of residual lithium on the surface of the lithium-rich metal oxide core, increasing the lithium-ion diffusion coefficient, and increasing the charge capacity of the lithium-ion battery cell. As can be seen from Embodiments 18 to 21, different ammonium salts can react with the residual lithium on the surface of the lithium-rich metal oxide core to generate corresponding compounds on the surface of the lithium-rich metal oxide core, thereby increasing the charge capacity of the lithium-ion battery. As can be seen from Embodiments 26 to 29, the lithium-rich metal oxide core may be made of different types of materials.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

**Claims**

1. A lithium-rich metal oxide, **characterized in that** the lithium-rich metal oxide comprises:

   a lithium-rich metal oxide core; and
   residual lithium on a surface of the lithium-rich metal oxide core, wherein
   based on 100 wt% as a total mass of the lithium-rich metal oxide, a mass percent k of the residual lithium satisfies: $k \leq 0.5$ wt%, and a lithium-ion diffusion coefficient D of the lithium-rich metal oxide satisfies: $D \geq 1.0 \times 10^{-15}$ cm$^2$/s.

2. The lithium-rich metal oxide according to claim 1, **characterized in that** $k \leq 0.1$ wt%.

3. The lithium-rich metal oxide according to claim 1 or 2, **characterized in that** $D \geq 1.0 \times 10^{-12}$ cm$^2$/s.

4. The lithium-rich metal oxide according to any one of claims 1 to 3, **characterized in that** a resistivity $\rho$ of the lithium-rich metal oxide satisfies: $\rho \leq 1$ $\Omega \cdot$cm, and optionally, $\rho \leq 0.5$ $\Omega \cdot$cm.

5. The lithium-rich metal oxide according to any one of claims 1 to 4, **characterized in that** the lithium-rich metal oxide further comprises: a compound $Li_zX$ on the surface of the lithium-rich metal oxide core, wherein X comprises at least one of $F^-$, $Cl^-$, $NO_3^-$, or $HSO_4^{-1}$, and z = 1; or
   X comprises $SO_4^{2-}$, and z = 2.

6. The lithium-rich metal oxide according to claim 5, **characterized in that** the lithium-rich metal oxide comprises:

   the lithium-rich metal oxide core; and
   a coating layer, wherein the coating layer coats the lithium-rich metal oxide core, and the coating layer comprises the compound $Li_zX$.

7. The lithium-rich metal oxide according to claim 5 or 6, **characterized in that** a molar ratio of the compound $Li_zX$ to the lithium-rich metal oxide core is 0.01: 1 to 0.1: 1, and optionally, the molar ratio of the compound $Li_zX$ to the lithium-rich metal oxide core is 0.02: 1 to 0.05: 1.

8. The lithium-rich metal oxide according to any one of claims 5 to 7, **characterized in that** the compound $Li_zX$ is LiF.

9. The lithium-rich metal oxide according to any one of claims 1 to 8, **characterized in that** a volume median diameter $D_{v50}$ of the lithium-rich metal oxide is 2 $\mu$m to 10 $\mu$m, and optionally 4 $\mu$m to 8 $\mu$m.

10. The lithium-rich metal oxide according to any one of claims 1 to 9, **characterized in that** a specific surface area of the lithium-rich metal oxide is 0.2 m$^2$/g to 5 m$^2$/g, and optionally 0.5 m$^2$/g to 2 m$^2$/g.

11. The lithium-rich metal oxide according to any one of claims 1 to 10, **characterized in that** a material of the lithium-rich metal oxide core comprises $Li_aM^nO_y$, $2 \leq a \leq 8$, and the $Li_aM^nO_y$ comprises one or more of $Li_2M^1O_2$, $Li_2M^2O_3$, $Li_3M^3O_4$, $Li_5M^4O_4$, $Li_6M^5O_4$, or $Li_8M^6O_6$;

    $M^1$ comprises one or more of Ni, Co, Fe, Mn, Zn, Mg, Ca, Cu, or Mo;
    $M^2$ comprises one or more of Mn, Sn, Mo, Ru, or Ir;
    $M^3$ comprises one or more of V, Nb, Cr, or Mo;
    $M^4$ comprises one or more of Fe, Cr, V, or Mo;
    $M^5$ comprises one or more of Co, V, Cr, or Mo;
    $M^6$ comprises Sn; and
    optionally, the $Li_aM^nO_y$ comprises one or more of $Li_2NiO_2$, $Li_2CuO_2$, $Li_2MnO_3$, $Li_3VO_4$, $Li_3NbO_4$, $Li_5FeO_4$, $Li_6CoO_4$, or $Li_8SnO_6$.

12. A method for preparing a lithium-rich metal oxide, **characterized in that** the method comprises:

    providing an ammonium salt and a lithium-rich metal oxide core; and
    mixing the ammonium salt and the lithium-rich metal oxide core, and treating the mixture to obtain the lithium-rich metal oxide.

13. The method according to claim 12, **characterized in that** the treatment comprises: sintering in an inert atmosphere for 2 to 10 hours, and optionally 4 to 8 hours;
and/or,
the treatment is performed at a temperature of 100 °C to 600 °C, and optionally 200 °C to 500 °C.

14. The method according to claim 12 or 13, **characterized in that** the ammonium salt comprises at least one of ammonium fluoride, ammonium chloride, ammonium nitrate, ammonium sulfate, or ammonium bisulfate; and optionally, the ammonium salt comprises ammonium fluoride.

15. The method according to any one of claims 12 to 14, **characterized in that** a molar ratio of the ammonium salt to the lithium-rich metal oxide core is (0.02 to 0.15): 1, and optionally 0.03: 1 to 0.08: 1.

16. The method according to any one of claims 12 to 15, **characterized in that** the method further comprises: performing airflow pulverization and sieving on a product of the treatment to obtain the lithium-rich metal oxide.

17. The method according to any one of claims 12 to 16, **characterized in that** a material of the lithium-rich metal oxide core comprises $Li_aM^nO_y$, $2 \leq a \leq 8$, and the $Li_aM^nO_y$ comprises one or more of $Li_2M^1O_2$, $Li_2M^2O_3$, $Li_3M^3O_4$, $Li_5M^4O_4$, $Li_6M^5O_4$, or $Li_8M^6O_6$;

$M^1$ comprises one or more of Ni, Co, Fe, Mn, Zn, Mg, Ca, Cu, or Mo;
$M^2$ comprises one or more of Mn, Sn, Mo, Ru, or Ir;
$M^3$ comprises one or more of V, Nb, Cr, or Mo;
$M^4$ comprises one or more of Fe, Cr, V, or Mo;
$M^5$ comprises one or more of Co, V, Cr, or Mo;
$M^6$ comprises Sn; and
optionally, the $Li_aM^nO_y$ comprises one or more of $Li_2NiO_2$, $Li_2CuO_2$, $Li_2MnO_3$, $Li_3VO_4$, $Li_3NbO_4$, $Li_5FeO_4$, $Li_6CoO_4$, or $Li_8SnO_6$.

18. A positive electrode plate, **characterized in that** the positive electrode plate comprises the lithium-rich metal oxide according to any one of claims 1 to 11.

19. A battery cell, **characterized in that** the battery cell comprises the positive electrode plate according to claim 18.

20. A battery, **characterized in that** the battery comprises the battery cell according to claim 19.

21. An electrical device, **characterized in that** the electrical device comprises the battery according to claim 20.

200 nm

Residual lithium

Compound LiF

FIG. 1

200 nm

Residual lithium

FIG. 2

100

| Provide an ammonium salt and a lithium-rich metal oxide core | 110 |

| Mix the ammonium salt and the lithium-rich metal oxide core, and treat the mixture to obtain a lithium-rich metal oxide | 120 |

FIG. 3

3

32

33

31

z x
y o

FIG. 4

FIG. 5

FIG. 6

FIG. 7

## INTERNATIONAL SEARCH REPORT

| International application No. |
| --- |
| **PCT/CN2023/077229** |

**A.    CLASSIFICATION OF SUBJECT MATTER**

H01M4/525(2010.01)i;   H01M4/505(2010.01)i;   H01M10/0525(2010.01)i

According to International Patent Classification (IPC) or to both national classification and IPC

**B.    FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT: 富锂, 残留, 残余, 余留, 游离, 表面, 扩散系数, 包覆, 核, lithium-rich, residual, free, surface, diffusion coefficient, coating, core

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2022257146 A1 (CONTEMPORARY AMPEREX TECHNOLOGY CO., LTD.) 15 December 2022 (2022-12-15) description, paragraphs [0003]-[0172] | 12-17 |
| Y | WO 2022257146 A1 (CONTEMPORARY AMPEREX TECHNOLOGY CO., LTD.) 15 December 2022 (2022-12-15) description, paragraphs [0003]-[0172] | 1-11, 18-21 |
| Y | CN 108054371 A (HARBIN INSTITUTE OF TECHNOLOGY) 18 May 2018 (2018-05-18) description, paragraphs [0004]-[0028] | 1-11, 18-21 |
| X | CN 104638227 A (HEFEI GUOXUAN HIGH-TECH POWER ENERGY CO., LTD.) 20 May 2015 (2015-05-20) description, paragraphs [0009]-[0038] | 12-17 |
| A | CN 115041459 A (JIANGXI UNIVERSITY OF SCIENCE AND TECHNOLOGY) 13 September 2022 (2022-09-13) entire document | 1-21 |

☑ Further documents are listed in the continuation of Box C.    ☑ See patent family annex.

| | |
| --- | --- |
| *    Special categories of cited documents: <br> "A"  document defining the general state of the art which is not considered to be of particular relevance <br> "D"  document cited by the applicant in the international application <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
| --- | --- |
| **30 October 2023** | **01 November 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/077229** |

### C.     DOCUMENTS CONSIDERED TO BE RELEVANT

| Category* | Citation of document, with indication, where appropriate, of the relevant passages | Relevant to claim No. |
| --- | --- | --- |
| A | CN 115347153 A (SHENZHEN DEFANGCHUANGYU NEW ENERGY TECHNOLOGY CO., LTD.) 15 November 2022 (2022-11-15)<br>      entire document | 1-21 |

Form PCT/ISA/210 (second sheet) (July 2022)

**INTERNATIONAL SEARCH REPORT**
Information on patent family members

International application No.

**PCT/CN2023/077229**

| Patent document cited in search report | | | Publication date (day/month/year) | Patent family member(s) | | | Publication date (day/month/year) |
|---|---|---|---|---|---|---|---|
| WO | 2022257146 | A1 | 15 December 2022 | EP | 4138158 | A1 | 22 February 2023 |
| | | | | EP | 4138158 | A4 | 12 April 2023 |
| | | | | US | 2022399540 | A1 | 15 December 2022 |
| CN | 108054371 | A | 18 May 2018 | None | | | |
| CN | 104638227 | A | 20 May 2015 | None | | | |
| CN | 115041459 | A | 13 September 2022 | None | | | |
| CN | 115347153 | A | 15 November 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XIE et al.** *Solid State Ionics*, 2007, vol. 178, 1218-1224

- **YANG et al.** *Electrochimica Acta*, 2012, vol. 66, 88-93